# EUROPEAN PATENT APPLICATION

(11) **EP 1 158 457 A1**
(43) Date of publication of application: **28.11.2001**
(21) Application number: 00304516.8
(22) Date of filing: 26.05.2000
(51) Int. Cl.: G06K 19/07

(54) **Data synchronizer and data synchronization method**

(71) Applicant: SONY CORPORATION, Tokyo 141 (JP)
(72) Inventor: Tsujii, Hitoshi, Shinagawa-ku, Tokyo 141 (JP)
(74) Representative: DeVile, Jonathan Mark, Dr.

(57) **Abstract**

The present invention is a data synchronizer and a data synchronization method for waveform-shaping an input signal which is a digital signal by data-synchronizing the input signal with a clock signal, wherein a period in which the input signal can be sampled from the count value of the clock signal counted by a counter and an out of synchronism detection period for monitoring whether the edge of the input signal exists in a counting possible period or a period in the vicinity of the counting possible period are formed, a sampling phase for the input signal is shifted when the edge signal is detected in the out of synchronism detection period. With this constitution, it is possible to maintain a data synchronization state after a certain period in an input signal reception initial period and to effectively remove jitter, glitch, noise and the like contained in the input signal.

In addition, the present invention is a non-contact IC card receiving a modulation signal space-transmitted from a data transmitter, demodulating the reception signal and decoding the data and conducting a predetermined data processing, wherein data synchronization means for sampling the demodulation output with a clock signal obtained from the received modulation signal to thereby make data synchronization and determining that out of synchronism of data occurs when the edge of the demodulation output is in the sampling period to thereby change a sampling phase, is provided between an analog circuit system demodulating the received modulation signal and a digital signal processing system decoding the demodulated data signal. By so constructing the non-contact IC card, jitter, glitch, noise and the like contained in the output of the analog circuit system are not transmitted by the digital signal processing system, thereby making it possible to prevent a vicious circle caused by the multiplier effect of "external noise", "offset drift" and "power variation" which are problems for non-contact IC card communications.

## Description

In recent years, a RF-ID (Radio Frequency Identification) has been proposed which is normally known as a non-contact IC card or an ID tag, and is constituted to receive, demodulate and decode a modulation signal space-transmitted from a data transmitter receiver referred to as a reader/writer and to store necessary data in accordance with the decoding result or to transmit data to the reader/writer. The RF-ID has been widely used as a data carrier to recognize a mobile body such as a human, a vehicle or a baggage.

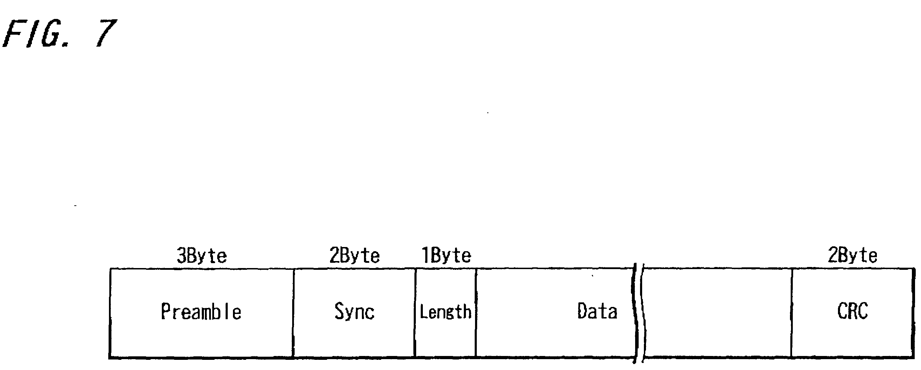

Now the outline of the RF-ID will be described. FIG. 7 shows an example of the structure of transmission data transmitted between the reader/writer and the RF-ID.

In FIG. 7, a three-byte preamble (PREAMBLE) is arranged at the top of the transmission data. The data of the PREAMBLE is mainly used for synchronization processing during the demodulation of data in the RF-ID.

The PREAMBLE is followed by a two-byte sync code (SYNC). This SYNC serves as a reference for timing and data after the SYNC is detected.

The sync code SYNC is followed by a one-byte length information (LENGTH). The information LENGTH indicates the effective length of data (DATA) arranged after this information LENGTH.

The DATA following LENGTH has a communication control data for communication between the reader/writer and the RF-ID, control data for the RF-ID itself or user data or the like arranged under a predetermined rule.

The DATA is followed by a two-byte check code (CRC) on the DATA.

Among those data forming the transmission data, data other than the PREAMBLE are significant data which must be accurately reproduced (demodulated) within the RF-ID.

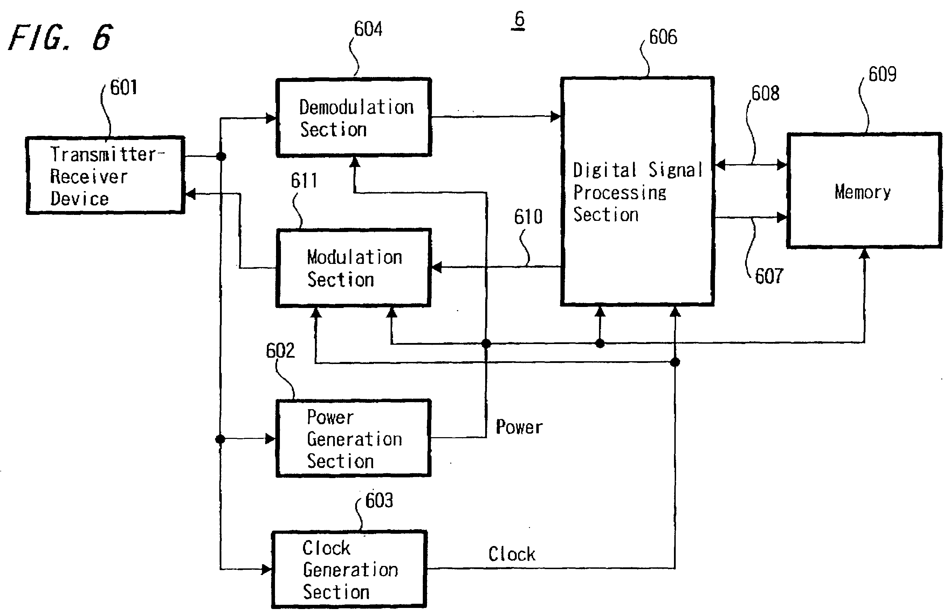

FIG. 6 shows an example of the constitution of a conventionally used battery-less type RF-ID, Here, description will be given to the RF-ID shown in FIG. 6, and in this case, a reception system and a transmission system thereof are separately described.

First, the reception system will be described.

In FIG. 6, reference numeral 601 denotes a reception device consisting of a loop coil or the like for receiving a signal space-transmitted from the reader/writer (which is a signal the amplitude of which has been modulated according to data to be transmitted, which signal will be referred to as a 'carrier signal' hereinafter).

Reference numeral 602 denotes a power generation section generating the power of respective circuits in the RF-ID from the received carrier signal.

Reference numeral 603 denotes a clock generation section generating a clock signal from the received carrier signal.

Reference numeral 604 denotes a demodulation section demodulating transmission data, as shown in FIG. 7, contained in the received carrier signal. A demodulation output signal 605 of the demodulation section 604 is a digital signal of two-valued logic such as communication control data for communication between the reader/writer and the RF-ID, control data for the control of the RF-ID itself or user data.

Reference numeral 606 denotes a digital signal processing section decoding the significant data in the transmission data demodulated by the demodulation section 604 and conducting processing for responding to a request from the reader/writer based on the decoding result. The digital signal processing section 606 conducts determination processing and operation processing with respect to the received data using the decoding result or memory processing for writing and/or reading the data necessary for these processings through a memory write/read bus 608 in a memory 609. Also, depending on the decoding result, the digital signal processing section 606 conducts transmission processing for encoding and forming the data obtained as a result of the determination processing, operation processing or memory processing into a transmission data format as shown in FIG. 7, so as to transmit the obtained data to the reader/writer.

Reference numeral 607 denotes a memory control signal including a write address, a read address, a memory enable signal and the like for memory processing.

Next, the transmission system of the RF-ID will be described.

As described above, the digital signal processing section 606 conducts transmission processing in accordance with the result of decoding the received significant data, encodes the data obtained as a result of the determination processing, operation processing or memory processing and arranges the resultant encoded data into a transmission data format.

Reference numeral 610 denotes transmission data arranged into the transmission data format.

Reference numeral 611 denotes a modulation section modulating the amplitude of the non-modulation carrier signal of the clock signal by means of the transmission data. The carrier signal generated by the modulation section is supplied to the transmitter-receiver device 601 and space-transmitted to the reader/writer.

Main matters required by a system user for the RF-ID of this type are as follows:
1. A time taken for the RE-ID to approach to the reader/writer is made short as much as possible and much data are transmitted during that time.
2. Even if the RF-ID approaches to the reader/writer while moving, a stable communication is carried out.
3. Cost is low and there is an option to be used as a disposable one.
4. Mechanical strength is strong.

To satisfy these requirements, the following may be pointed out as technical guidelines:
1. A simple asynchronization for communication procedures is not used so as to increase transmission rate.
2. Jitter resistance, fading resistance and power voltage variation resistance are enhanced.
3. The circuit arrangement is simplified and made as an IC.
4. The size of an IC chip is made small as much as possible.

In accordance with the above-stated technical guidelines, such measures, as those for stabilizing the power generated by the power generation section 602 and for enhancing the performance of the demodulation section 604, have been usually taken for the conventional RF-ID. In addition, the carrier signal is transmitted with a frequency set at a multiple of the data frequency and a clock signal is directly generated from the carrier signal in the clock generation section 603 so as to remove a clock signal generation PLL inside of the RF-ID. As a data synchronization method in the reception system, there is proposed a method of waveform shaping a digital data using an algorithm such as in a Universal Asynchronous Receiver-Transmitter (UART).

Although various measures are taken to respond to system user's requests, the conventional RF-ID has still disadvantages as follows. A digital signal, no matter how the signal is encoded, cannot avoid distortion somehow or other if it is passed through an analog modulation/demodulation, system and only an approximate waveform can be reproduced. To minimize the distortion, the above-stated measures, i.e., stabilizing power supply and enhancing the performance of the demodulation section or the like, have been taken. In the batter-less type RF-ID, however, a carrier signal not only carries data as in the case of ordinary radio communication but also serves as a power source. Due to this, the generated power is not independent on communication conditions and stable power cannot be secured. Thus, as a result of decoding data or the like in the digital signal processing section 606, an error may disadvantageously occur. Further, if the RF-ID is installed at a mobile body (including a case where the RF-ID is held by a hand), fading may disadvantageously influence the RF-ID.

Moreover, to eliminate a clock generation PLL in the RF-ID as stated above, the carrier signal is transmitted while setting the frequency thereof set at a multiple of the data frequency and a clock signal is directly generated from the received carrier signal. In this case, the fact that the frequency of a cock signal is a multiple of the data frequency means that if the clock signal is divided, a clock signal synchronous with the data can be obtained. In this method, it appears that synchronous communication can be easily established. Actually, however, since the phase relation between the transmitter side and the receiver side largely relies on communication conditions, the synchronous communication cannot be established so easily in fact.

In case of establishing synchronous, communication in the RF-ID, waveform shaping (data synchronization) may be conducted using an algorithm such as in the UART stated above. Since data synchronization is conducted with reference to the first transition among level transitions caused by the data (which transition will be referred to as 'edge' hereinafter), the reliability of the first edge is important. Unlike wire communications, the RF-ID includes jitter (variation of edge phases) and glitch ((unwanted pulsed) noise) much and the noise tends to be erroneously determined as an edge. Thus, if this method is employed for the RF-ID, waveform shaping errors tend to frequently occur under strict communication conditions.

Furthermore, the RF-ID has a problem peculiar to itself, that is, the occurrence of a vicious circle caused by the multiplier effect of three factors which result in unstable RE-ID communication, i.e., "external noise", "offset drift" and "power variation" . The external noise causes a change in a carrier signal, causes pulse noise in a demodulation signal or causes jitter and glitch stated above in a decoded signal. The offset drift changes the detection output due to the influence of the temperature characteristics of a semiconductor during the demodulation of the carrier signal or the like. As a result, jitter occurs to the edges of the demodulation output signal 605. The power variation is particularly serious for the battery-less type RF-ID which generates power from a carrier signal. Although the power generation section 602 is provided with a stabilization circuit, a stable power is not necessarily generated during communication due to the external factors such as communication distance and positional relationship of the reception device. Besides, the maximum power supply of the power generation section 602 satisfies required power but is not so large. Owing to this, the power thus generated is susceptible to the influence of the transient of the digital signal processed by the digital signal processing section 606 and easily varied. If at least one of the three factor causes adverse effect, the vicious circle occurs, i.e., [ · Jitter and glitch occur. → · The digital circuit system (digital signal processing section 606) malfunctions. → · Transient occurs in the digital circuit system. → · The power of the power generation section 602 varies. → · The analog circuit system (demodulation section 604) malfunctions. → · Jitter and glitch occur.] This vicious circle has much to do with "the maximum communication distance" which is the prime item among the RF-ID performance baselines. As the RF-ID is less resistant to the above-stated three factors, the maximum communication distance is reduced further.

Various aspects and features of the present invention are defined in the appended claims.

The present invention provides a data synchronizer for waveform-shaping an input signal consisting of a digital signal by synchronizing the input signal with a predetermined clock signal, comprising
an edge detection means for detecting edges of the input signal and outputting edge signals;
a start detection means for detecting a first edge signal when the input signal is inputted, among the edge signals outputted, and for generating a start signal when detecting the first edge signal;
a counter for starting counting of a clock signal in a period of 1/N times as long as a minimum period of the input signal by the start signal, where N is an integer, and generating count values, generating a first timing signal at a first predetermined value of the count values, generating a second timing signal at a second predetermined value of the count values and setting the count values at values such that a phase of the first timing signal is shifted when a preset signal is received;
a sampling means for sampling the input signal in accordance with the first timing signal and outputting the sampled signal as a data-synchronized output signal; and
a preset signal generation means for monitoring a position at which the edge signal exists in accordance with the second timing signal and for outputting the preset signal when the position at which the edge signal exists is in one of a period of the first timing signal and a period in the vicinity of the first timing signal.

Embodiments of the present invention relate to a data synchronizer which waveform-shapes a digital signal, to a data synchronization method and to a non-contact IC card having the data synchronizer. Embodiments of the present invention also relate in particular, to a data synchronizer ensuring waveform-shaping a data signal with a simple constitution, data synchronization method and a non-contact IC card having the data synchronizer.

Embodiments of the present invention can provide a data synchronizer, a data synchronization method and a non-contact IC card having the data synchronizer capable of solving the conventional problems, ensuring synchronization for waveform shaping with simple constitution and without any influence of jitter and glitch.

In the data synchronizer according to the present invention, the counter is a cyclical counter generating cyclical count values and generates the first predetermined value and the second predetermined value among the count values at every period corresponding to a half period of a minimum period of the input signal.

In the data synchronizer according to the present invention, the cyclical counter counts clock signals while generating cyclical count values in a period corresponding to the minimum period of the input signal and generates the second predetermined value one-count after one count amount of the first predetermined value among the count values.

In the data synchronizer according to the present invention, the cyclical counter sets a count value to the first predetermined value among the count values when receiving the preset signal.

Further, the present invention provides a data synchronization method for waveform shaping an input signal consisting of a digital signal by synchronizing the input signal with a predetermined clock signal, comprising
an edge detection step of detecting edges of the input signal and outputting edge signals;
a start detection step of detecting a first edge signal when the input signal in inputted, among the edge signals, and of generating a start signal when detecting the first edge signal;
a count step of starting a counting of clock signals in a period of 1/N times as long as a minimum period of the input signal by the start signal, where N is an integer, of generating count values, of generating a first timing signal at a first predetermined value of the count values, and of generating a second timing signal at a second predetermined value of the count values;
a sampling step of sampling the input signal in accordance with the first timing signal and outputting the sampled signal as a data-synchronized output signal;
a preset signal generation step of monitoring a position at which the edge signal exists in accordance with the second timing signal and for outputting the preset signal when the position at which the edge signal exists is in one of a period of the first timing signal or a period in the vicinity of the first timing signal;and
a count value setting step of setting the count values to a value such that a phase of the first timing signal is shifted when the preset signal is received.

Moreover, the present invention provides a non-contact IC card receiving a modulation signal space-transmitted from a data transmitter and modulated by a data signal, generating power from the received modulation signal by a power generation means built therein, generating a clock signal from the received modulation signal by a clock generation means built therein, activating a signal processing operation by the power generated by the power generation section, conducting a digital signal processing using the clock signal generated by the clock generation means, obtaining the data signal from the received modulation signal and conducting a predetermined data processing in accordance with the data signal, which is comprised of
a demodulation means, supplied with the power generated by the power generation section, for demodulating and outputting the data signal from the received modulation signal;
a data synchronization means, supplied with the power generated by the power generation section and with an output signal of the demodulation means, for sampling and outputting the output signal of the demodulation means with the clock signals in a predetermined sampling period and for changing a phase of the sampling when the edge of the output signal of the demodulation means is in one of the sampling period or a period in the vicinity of the sampling period, thereby conducting data synchronization for the output signal of the demodulation means; and
a digital signal processing means, supplied with the power generated by the power generation section and with an output signal of the data synchronization means, for decoding the output signal of the data synchronization means using the clock signal and for conducting a predetermined data processing in accordance with the decoding result.

In the non-contact IC card according to the present invention,
the data synchronization means consists of an edge detection means for detecting edges of the output signal of the demodulation means and outputting edge signals;
a start detection means for detecting a first edge signal when the output signal of the demodulation means is inputted, among the edge signals outputted, and for generating a start signal when detecting the first edge signal;
a counter for starting a counting of clock signals in a period of 1/N times as long as a minimum period of the output signal of. the demodulation means by the start signal, where N is an integer, generating count values, generating a first timing signal at a first predetermined value of the count values, generating a second timing signal at a second predetermined value of the count values and setting the count values to a value such that a phase of the first timing signal is shifted when a preset signal is received;
a sampling means for sampling an output signal of the demodulation means in accordance with the first timing signal and outputting the sampled signal as a data-synchronized output signal; and
a preset signal generation means for monitoring a position at which the edge signal exists in accordance with the second timing signal and for outputting the preset signal when the position at which the edge signal exists is in one of a period of the first timing signal or a period in the vicinity of the first timing signal.

In the non-contact IC card according to the present invention, the counter is a cyclical counter generating cyclical count values and generates the first predetermined value and the second predetermined value among the count values at every period corresponding to a half period of a minimum period of the input signal.

In the non-contact IC card according to the present invention, the cyclical counter circulates and counts a clock signal in a period corresponding to the minimum period of the input signal and generates the second predetermined value after one count amount of the first predetermined value among the count values.

Furthermore, in the non-contact IC card according to the present invention, the cyclical counter sets a count value to the first predetermined value among the count values when receiving the preset signal.

The invention will now be described by way of example with reference to the accompanying drawings, throughout which like parts are referred to by like references, and in which:
FIG. 1 is a block diagram showing the constitution of a data synchronizer according to an embodiment of the present invention;
FIGS. 2A to 2G are waveform diagrams showing the operation of the data synchronizer according to the present invention, respectively;
FIG. 3 is a circuit diagram showing the data synchronizer of an embodiment according to the present invention;
FIGS. 4A to 4H are waveform diagrams showing the operation of the data synchronizer in the embodiment according to the present invention;
FIG. 5 is a block diagram showing the constitution of a non-contact IC card according to an embodiment of the present invention;
FIG. 6 is a block diagram showing the constitution of a conventional RF-ID; and
FIG. 7 is a block diagram showing an example of the structure of transmission data transmitted between the reader/ writer of the RF-ID and the RF-ID.

Now, an embodiment according to the present invention will be described in detail. In RF-ID communication, the data rate on a receiver side is managed with a very high frequency accuracy. As already described above, the data rate is influenced by an external disturbance such as a jitter and a noise while the data passes a transmission path and a demodulation circuit. However, since glitch accompanying the jitter and noise does not change the basic data rate, the data rate which can be received by the receiver side varies if seen in quite a narrow time range but does not vary if seen in a somewhat wide time range. If it is assumed that data rate shows no variation, it is possible to predict the next edge with reference to an edge of data and the minimum period of this edge (variation period).

Embodiments of the present invention utilize a method of predicting this edge of the data. That is, when an input signal is sampled to conduct data synchronization for waveform shaping, the sampling is carried out while always avoiding the edges of the data.

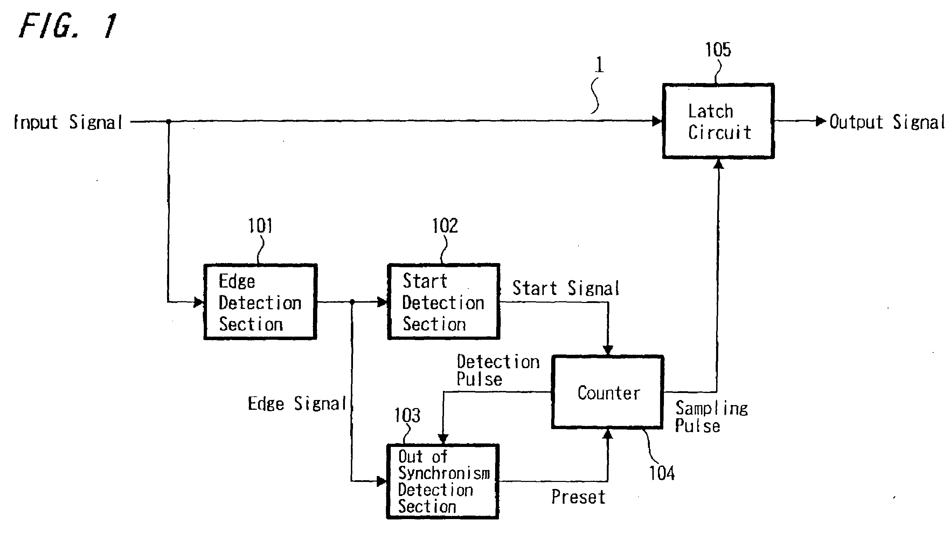

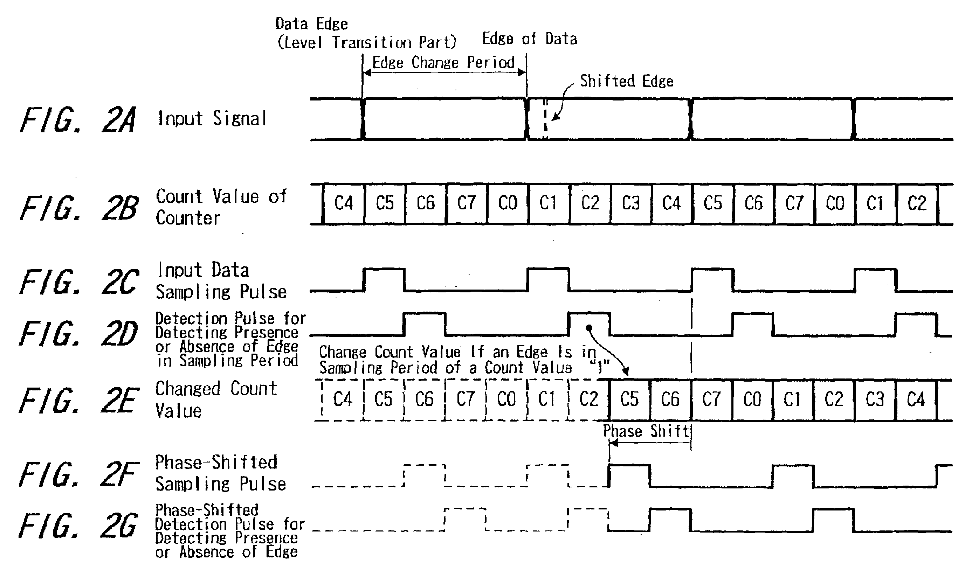

FIG. 1 shows the constitution of a data synchronization circuit 1 according to an embodiment of the present invention. FIGS. 2A to 2F are each a waveform diagram for describing the operation of the data synchronization circuit 1 according to the embodiment of the present invention.

In FIG. 1, an input signal, which is a digital signal including a jitter, a glitch and a noise, is inputted to an edge detection section 101 and to a latch circuit 105.

The edge detection section 101 detects the edge of the input signal (either a leading edge or a trailing edge). If detecting the edge, the edge detection section 101 outputs an edge signal.

A start detection section 102 detects the first edge signal outputted after the input signal has been supplied, among the edge signals outputted from the edge detection section 101 and generates a start signal for starting the counting operation of a counter 104 based on the detected first edge signal.

An out of synchronism detection section 103 detects whether or not the edge of the input signal exists in an input signal sampling period while the count value of the counter 104 is a predetermined value to be described later, based on the edge signal. If such an edge exists, the section 103 judges that the out of synchronism of data occurs and outputs an out of synchronism detection signal. The out of synchronism detection signal is fed to the counter 104 to thereby preset the count value of the counter 104 to a predetermined value.

The counter 104 generates cyclical count values C0 to Cm (C0 to C7 in this embodiment) (FIG. 2B) by counting clock signals (not shown) in a period of 1/N times (where N is an integer) as long as the edge variation period of the input signal (FIG. 2A). The number of count values C0 to Cm is selected as an integer multiple of the N. Among those count values, the first predetermined values "C1" and "C5" are determined as periods in which the input signal can be sampled. The counter 104 generates a sampling pulse (FIG. 2C) so as to sample (latch) the input signal in the sampling possible periods. Among those count values of the counter 104, the second predetermined values "C2" and "C6" delayed from the first predetermined values by one count are determined as out of synchronism periods for detecting the above-stated out of synchronism of data. In these periods, a detection pulse (FIG. 2D) for detecting the out of synchronism of data is generated. It is noted that the out of synchronism detection period does not necessarily correspond to a count value delayed by one count from that corresponding to the sampling possible period and may correspond to a count value in the vicinity of the sampling possible period.

The latch circuit 105 latches the input pulse in response to the sampling pulse and outputs the latched signal as a data-synchronized output signal.

If the out of synchronism detection signal is not generated, that is, if no edge exists in the sampling possible period, then the counter circulates from "C0" to "C7" as shown in FIG. 2B to continue the count. Following this, the sampling pulse for the input signal and the edge detection pulse are also maintained at a constant phase and continuously generated.

If an edge exists (e.g., an edge exists in the first period of count value "1" (FIG. 2A) among the count values (FIG. 2B)) in the sampling possible period, an out of synchronism detection signal is generated in the out of synchronism period delayed from the sampling possible period by one count or positioned in the neighborhood of the sampling possible period. The count value of the counter 104 is forcedly preset at a predetermined count value ("C5" in this case). Thereafter, the counter circulates and continues the counting again with the preset count value "C5" as an initial value.

FIG. 2E shows how the count value changes by presetting. The count values indicated by broken lines are values prior to the presetting and those indicated by solid lines are values after the presetting. The count value indicating the sampling possible period ("C5" in this case) is used for the preset count value. Therefore, a sampling pulse (FIG. 2F) and a detection pulse (FIG. 2G) having new phases shifted from those before the change of the count value are generated in response to the changed, new count value by the presetting. It is noted that the count value for the presetting is not necessarily a count value indicating the sampling possible period.

As stated above, depending on whether or not the edge of the input pulse exists in the sampling possible period, the phase of the sampling pulse is shifted. Based on this sampling pulse, the latch circuit 105 samples (latches) the signal portions other than the edge in the input signal. Thus, the output signal of the latch circuit 105 is synchronous with a clock signal and, at the same time, the jitter, glitch and noise present in periods other than the sampling period are eliminated.

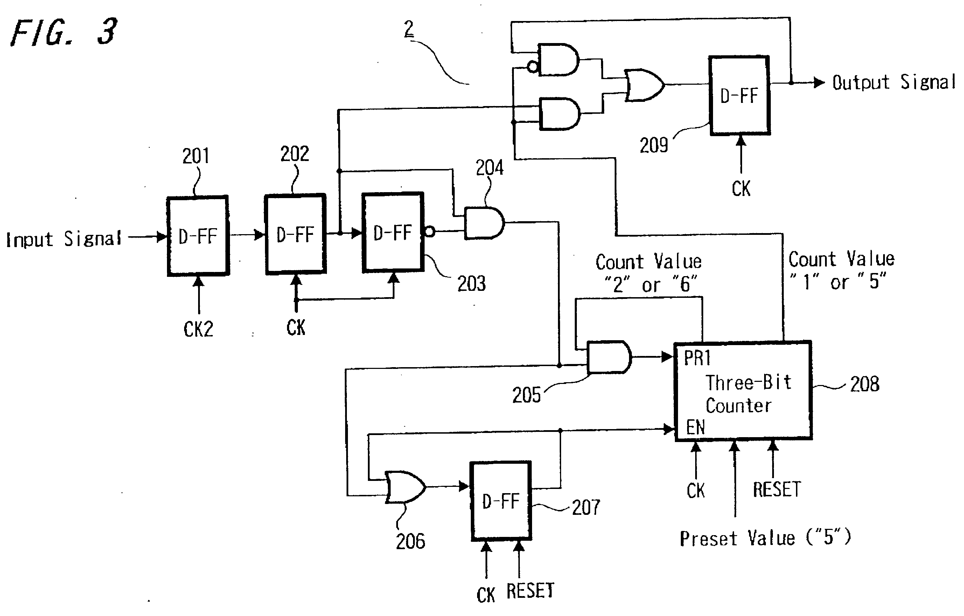

FIG. 3 shows the constitution of a data synchronizer 2 of an embodiment according to the present invention.

In FIG. 3, an input signal, which is a digital signal including a jitter, a glitch and a noise, is supplied to an input buffer 201. A D-type flip-flop (to be referred to as D-FF hereinafter) 201 serving as the input buffer synchronizes the input signal with a clock signal CK2 having a frequency 128 times as high as the data rate of the input signal. The jitter and glitch which frequencies are lower than the frequency of the clock signal CK2, pass the D-FF 201. Even if they pass the D-FF 201, no problems occur since the D-FF 201 is aimed to only synchronize the input signal with the clock signal CK2. It is noted that the D-FF 201 may be omitted.

Two D-FFs 202, 203 and an AND gate 204, serving as an edge detection section, detect a leading edge of the input signal. The frequency of a clock signal CK is eight times as high as the data rate of the input signal. The first D-FF 202 has a function to remove glitch which frequency is equal to or higher than clock frequency. The second D-FF 203 and the AND gate 204 coupled to the D-FF 203 detect an edge. The AND gate 204 outputs a pulse (edge signal) corresponding to one cycle amount of the clock signal when the leading edge is in the state that the output of the first D-FF 202 is "1" and that of the second D-FF 203 is "0".

An OR gate 206 and a D-FF 207, serving as a start detection section, detect the first edge among those of the input signal and outputs a start signal. If the edge signal is inputted to the OR gate 206, the output of the D-FF 207 is set to "1", which state is maintained until a reset signal RESET is supplied.

In a three-bit counter 208 serving as a counting means, a specific value (such as "4") corresponding to the phase of the leading edge of the data is set. If receiving a start signal from the D-FF 207 of the start detection section, the counter 208 starts counting of the clock signals CK. This is intended to temporarily synchronize the counter 208 with the first edge of the input signal. Depending on usage, however, temporary synchronization may not be required. While the clock signal is eight times as fast as the input signal, i.e., three bits, the counting period of the counter corresponds to the period of one data. It is noted that the counter 208 includes a decoder to generate an output signal corresponding to a specific count value. An AND gate 205 serving as an out of synchronism detection section, generates an out of synchronism detection signal if an edge signal is detected while the counter 208 shows a predetermined value (e.g., "2" or "6"). The counter 208 forcedly sets the count value to a predetermined value, e.g., 5 by the out of synchronism detection signal whereby the count values of the counter 208 are corrected. A D-FF 209 serving as an output buffer (latch circuit) samples (latches) the input signal when the counter 208 shows a preset value (e.g., "1" or."5"). The D-FF 209 holds the latched data in other periods.

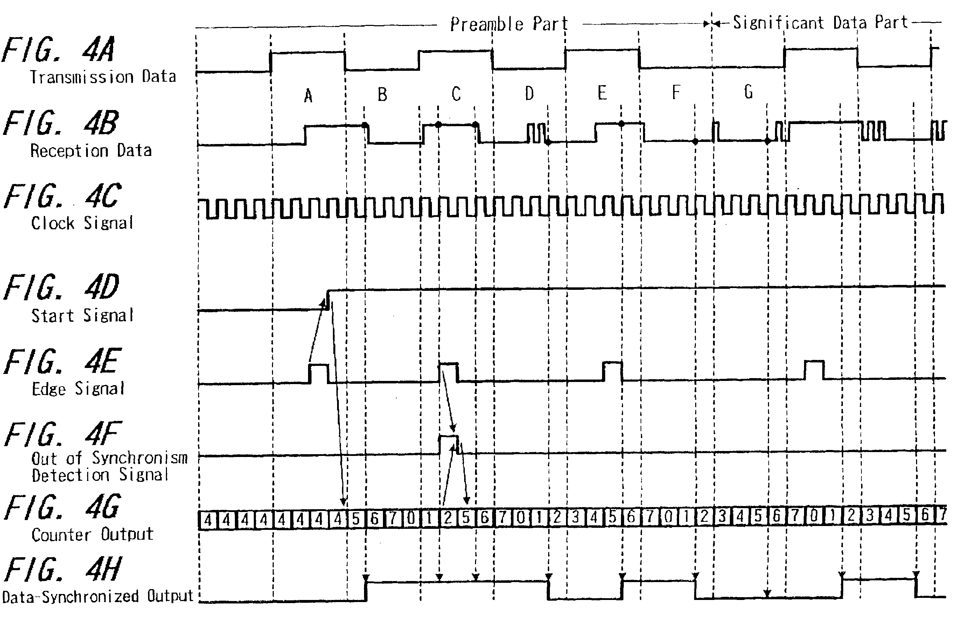

FIGS. 4A to 4G are each a waveform diagram showing the operation timing of the important parts of the data synchronizer 2 in the embodiment shown in FIG. 3. The reception data which is an input signal (FIG. 48) consists of a preamble part or period and a significant data part or period and includes a delay of a signal and a noise. In a period A, the first leading edge is detected and a start signal (FIG. 4D) is outputted from the D-FF 207. Based on this output, the counter 208 starts its counting from the initial value "4". The leading edge of the reception data (FIG. 4B) is delayed. In a period B, since the count value becomes 5, the reception data is sampled and the output of the D-FF 209 is changed (FIG. 4H). Since this first sampling output might be, however, offset in phase from the original sampling output, it is of no significance as output data.

In a period C, the second edge signal is detected. However, since the count value at this moment is "2", an out of synchronism detection signal (output of the AND gate 205), becomes 1. Then, the value of the counter 208 is changed to a preset value of "5" (FIG. 4G). This operation causes the output of the counter 208 to be re-synchronized with the reception data.

After a period D, when the count value is "1" or "5", the reception data is sampled and the output of the D-FF 209 is changed. Jitter, glitch and the like are frequently generated much in portions corresponding to the count values of the reception data, for example, "2", "3", "6", "7" and the like. At the position of "1" or "5", the state of the data is most stabilized and erroneous detection is decreased.

The above description concerns the embodiment of the present invention. In addition, the following modification to the present invention may be made. In the above embodiment, although an example using a three-bit counter is disclosed, the number of bits of the counter (as well as the multiple of a clock signal) may be freely chosen. Further, the range of the count values in which the out of synchronism is determined when an edge signal occurs, i.e., the constitution of the decoder of the counter 208 for inputting an output signal to the AND gate 205 and that of the decoder for generating a signal for sampling reception data can be freely set,

With the constitution of the data synchronization circuit 2 in the embodiment according to the present invention, the start detection section consisting of the OR gate 206 and DD-FF 207 generates the start signal based on the first edge signal among the edge signals detected by the edge detection section consisting of the D-FF 202, 203 and the AND gate 204. This start signal allows the three-bit counter 208 to start its operating. Thus, in the input signal initial period, data synchronization is roughly made. Further, in the following entire data string of the input signal, the phases of the edges of the data are monitored by using the count values for detecting the out of synchronism of data generated from the three-bit counter 208. Based on the monitoring result, the sampling phase of the input signal at the D-FF 209 is changed. In this way, data synchronization state can be constantly maintained and jitter, glitch, noise and the like are eliminated from the input signal including jitter, glitch, noise and the like without the need to use a complicated circuit such as a PLL or the like, thereby allowing reproducing the complete data which waveform has been shaped.

In the data synchronization circuit 2 in the embodiment according to the present invention constituted as described above, when the signal having data structure, consisting of the preamble part and the significant data part, is supplied as an input signal, data synchronization is roughly made at the preamble part and the data synchronization state is constantly maintained at the following significant data part. Thus, the circuit 2 is optimum for use in the synchronization of transmission data for a RF-ID and also applicable to data synchronization in an ordinary data transmission system.

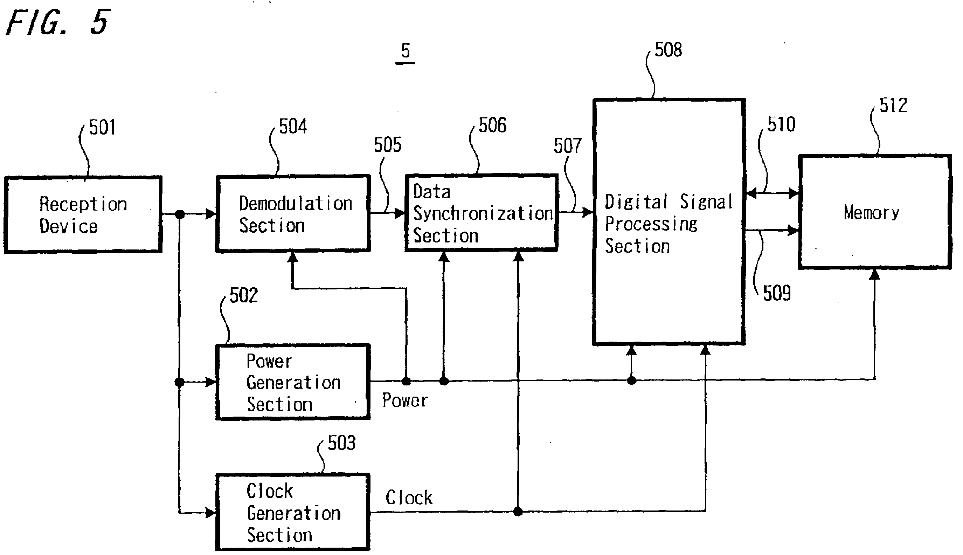

FIG. 5 shows the constitution of a RF-ID 5 provided with the data synchronization circuit 1 of the present invention. It is noted that FIG. 5 shows only a reception system.

The feature of RF-ID 5 shown in FIG. 5 resides in that a data synchronization section 506 is provided between a demodulation section 504 consisting of an analog circuit and a digital signal processing section 508 consisting of a digital circuit. The data synchronization section 506 corresponds to the data synchronization circuit 1 already described above and shown in FIG. 1.

In FIG. 5, reference numeral 501 denotes a reception device consisting of a loop coil for receiving a carrier signal space-transmitted from the reader/writer and the like.

Reference numeral 502 denotes a power generation section generating the power of each circuit in the RF-ID from the received carrier signal.

Reference numeral 503 denotes a clock generation section generating a clock signal from the received carrier signal.

The demodulation section 504 demodulates the transmission data, as shown in, for example, FIG. 7, contained in the received carrier signal. A demodulated output signal 505 of the demodulation section 504 is a two-valued logic digital signal such as communication control data for communication between the reader/writer and the RF-ID, control data for the RF-ID itself, user data or the like. The demodulated output signal 505 includes jitter, glitch, noise and the like resulting from the influence of external disturbance noise on the carrier signal on the transmission path, the variation of the power generated by the power generation section 502, the temperature characteristics of semiconductors forming the demodulation section 504, transient in the digital signal processing section 508 or the like.

The data synchronization section 506 makes the data synchronizing of the demodulated output signal 505 including jitter, glitch, noise and the like of the demodulation section 504 and shaping the waveform thereof. The data synchronization section 506 has the same constitution as that of the data synchronization circuit 1 already described above and shown in FIG. 1 and consists of the following sections:

An edge detection section detecting the edge (either a leading edge or a trailing edge) of the demodulation output signal 505 and outputting an edge signal.

A start detection section detecting the first outputted edge signal among the edge signals outputted from the edge detection section and generating a start signal for starting the count operation of the counter based on the first edge signal thus detected.

An out of synchronism detection section detecting whether or not the edge of the demodulated output signal 505 exists in a period in which the demodulated output signal 505 is sampled based on the edge signal when the count value of the counter is the second predetermined value, and outputting an out of synchronism detection signal if the edge exists and it is, therefore, determined that out of synchronism of data occurs.

A counter for counting clock signals in a period of 1/N times as fast as the period of the variation of the demodulated output signal 505, generating cyclical count values, generating a sampling pulse for the demodulated output signal 505 at the first predetermined value of the count values and generating a detection pulse for detecting the out of synchronism of data at the second predetermined value delayed by one count from the first predetermined value of the count values.

A latch circuit latching the demodulated output signal 505 by using the sampling pulse and outputting the latched signal as a data-synchronized output signal 507.

It is noted that the concrete constitution of the data synchronization circuit 506 is the same as that of the data synchronization circuit 2 in the embodiment already described above and shown in FIG. 3.

The operation of the data synchronization section 506 is the same as that of the data synchronization circuit 1 described with reference to FIG. 1. If an out of synchronism detection signal is not generated, i.e., if the edge of the demodulated output signal 505 does not exist in the sampling period, the counter circulates to continue the counting. Following this, the sampling pulse for the input signal and the edge detection pulse edge are continuously generated while maintaining them to have fixed phases, respectively.

In addition, if an edge exists in the sampling period, an out of synchronism detection signal is generated in the out of synchronism detection period delayed by one count from the sampling period. The counter is forcedly preset to a predetermined count value by the out of synchronism detection signal. Thereafter, the counter circulates again to continue the counting with the preset count value set as an initial value.

As can be seen from the above, the phase of the sampling pulse is shifted, depending on whether or not the edge of the demodulated output signal 505 exists in the sampling period. Based on the sampling pulse, the latch circuit samples (latches) the signal portions, other than the edge, of the demodulated output signal 505. Thus, the output signal 507 of the latch circuit is synchronized with the clock signal and jitter, glitch and noise existing in periods other than the sampling period are eliminated.

The digital signal processing section 508 decodes significant data in the output signal 507 waveform-shaped and data-synchronized by the data synchronization section 506, and conducts the processing for responding to a request from the reader/writer based on the decoding result. The digital signal processing section 508 conducts determination processing and operation processing with respect to the reception data based on the decoding result or conducts memory processing for writing and reading the data necessary for these processings through the memory write/read bus 510 into/from a memory 512. Depending on the decoding result, the digital signal processing section 508 conducts transmission processing for encoding and shaping the data obtained as a result of the determination processing, operation processing or memory processing into the format of transmission data as shown in FIG. 7 stated above to transmit the data to the reader/writer.

Reference numeral 509 denotes a memory control signal including a write address, a read address, a memory enable signal and the like for the memory processing.

In the RF-ID 5 stated above, even if the demodulated output signal 505, obtained by demodulating the carrier signal received by the reception device 501 of the RF-ID in the demodulation section 504, includes jitter, glitch, noise and the like due to the influences of external disturbance noise of the transmission path, the power variation at the power generation section 502, the temperature characteristics of the demodulation section 504 or the transient at the digital signal processing section 508, in the data synchronization section 506, the start detection section generates a start the signal based on the first edge signal among the edge signals detected by the edge detection section and the counter starts the count processing in response to this start signal. Due to this, data synchronization is roughly made in the initial period corresponding to the preamble part of the demodulated output signal 505 and the phases of the edges of the data are monitored by the count values for detecting the out of synchronism of data generated from the counter in the entire data string corresponding to the significant data of the demodulated output signal 505. Based on the monitoring result, the sampling phase of the demodulated output signal 505 in the latch circuit is changed, so that the data synchronization state is constantly maintained.

With the RF-ID 5, therefore, the complete data from which jitter, glitch, noise and the like are removed and which is waveform-shaped, is supplied to the digital processing section 508 without the need to use a complicated circuit such as a PLL or the like.

Also, with the RF-ID 5, if the demodulated output signal 505 includes jitter, glitch or noise resulting from the variation of the power generated from the received carrier signal, the signal waveform-shaped and data-synchronized by the data synchronization section 506 is supplied to the digital signal processing section 508. Thus, no error occurs to the decoding result of the digital signal processing section 508.

Further, with the RF-ID 5, even if the demodulated output signal 505 includes jitter, glitch or noise due to the influence of fading, the complete data waveform-shaped and data-synchronized by the data synchronization section 506 is supplied to the digital signal processing section 508. Thus, no error occurs to the decoding result of the digital signal processing section 508.

With the RF-ID 5, even if one of the three factors which makes the RF-ID communication unstable, i.e., "external noise", "offset drift" and "power variation", causes adverse effect, the data synchronization section 506 provided between the demodulation section 504 serving as an analog circuit system and the digital signal processing section 508 serving as a digital circuit system removes jitter, glitch or noise from the signal transmitted from the analog circuit system to the digital circuit system. Thus, even if the vicious circle due to the multiplier effect of the "external noise", "offset drift" and "power variation", i.e., [· Jitter and glitch occur. → · The digital circuit system (digital signal processing section 508) malfunctions. → · Transient occurs to the digital circuit system. → · The power of the power generation section 502 varies. → ·The analog circuit system (demodulation section 504) malfunctions. → · Jitter and glitch occur.] occurs, the analog circuit system is disconnected from the digital circuit system and the occurrence of such a vicious circle can be prevented.

Moreover, by providing the data synchronization section 506 between the analog circuit system and the digital circuit system, the RF-ID 5 has improved resistance to at least " external noise" and "power variation" among the three factors "external noise", "offset drift" and "power variation" which result in the above-stated vicious circle. Owing to this, the prime item of "the maximum communication distance" among the RF-ID performance baselines can be improved.

Additionally, by providing the data synchronization section 506 between the analog circuit system and the digital circuit system, the RF-ID 5 does not cause the above-stated vicious circle. Thus, the phase relationship between the transmitter side (reader/writer) and the receiver side (RF-ID5) becomes less influenced by the communication conditions. Even the RF-ID of the type, in which data is synchronized with the clock signal directly generated from the received carrier signal, can establish the synchronization relationship between the transmitter and receiver sides satisfactorily.

Furthermore, in the RF-ID 5, the data synchronization section 506 provided in the later stage of the demodulation section 504 conducts rough data synchronization in the initial period corresponding to the preamble part of the demodulated output signal 505 and monitors the detection of the out of synchronism in the entire data string corresponding to the significant data of the demodulated output signal 505. Then, the data synchronization section 506 corrects a sampling phase to prevent the edges of the demodulated output signal 505 from entering the sampling period and constantly maintains the data synchronization state. Thus, waveform shaping errors do not frequently occur even under strict communication conditions.

Having described preferred embodiments of the invention with reference to the accompanying drawings, it is to be understood that the invention is not limited to those precise embodiments and that various changes and modifications could be effected therein by one skilled in the art without departing from the spirit or scope of the invention as defined in the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A data synchronizer for waveform-shaping an input signal consisting of a digital signal by synchronizing the input signal with a predetermined clock signal, comprising:
an edge detection means for detecting an edge of the input signal and outputting an edge signal;
a start detection means for detecting a first edge signal when said input signal is inputted, among said edge signals outputted, and for generating a start signal when detecting the edge signal;
a counter starting a counting of clock signals in a period of 1/N times as long as a minimum period of said input signal by said start signal, where N is an integer, generating a count value, generating a first timing signal at a first predetermined value of the count values, generating a second timing signal at a second predetermined value of said count values and setting said count value to a value such that a phase of said first timing signal is shifted when a preset signal is received;
a sampling means for sampling said input signal in accordance with said first timing signal and outputting the sampled signal as a data-synchronized output signal; and
a preset signal generation means for monitoring a position at which said edge signal exists in accordance with said second timing signal and for outputting said preset signal when the position at which said edge signal exists is in one of a period of said first timing signal or a period in the vicinity of said first timing signal.

2. A data synchronizer according to claim 1, wherein said counter is a cyclical counter generating cyclical count values and generates said first predetermined value and said second predetermined value among said count values at every period corresponding to a half period of a minimum period of said input signal.

3. A data synchronizer according to claim 2, wherein said cyclical counter circulates and counts in a period corresponding to the minimum period of said input signal and generates said second predetermined value after one count amount of the first predetermined value among said count values.

4. A data synchronizer according to claim 3, wherein said cyclical counter sets a count value to the first predetermined value among said count values when receiving said preset signal.

5. A data synchronization method for waveform shaping an input signal consisting of a digital signal by synchronizing the input signal with a predetermined clock signal, comprising:
an edge detection step of detecting an edge of the input signal and outputting an edge signal;
a start detection step of detecting a first edge signal when said input signal is inputted, among said edge signals outputted, and of generating a start signal when detecting the edge signal;
a count step of starting a counting of clock signals in a period of 1/N times as long as a minimum period of said input signal by said start signal, where N is an integer, of generating a count value, of generating a first timing signal at a first predetermined value of the count value, and of generating a second timing signal at a second predetermined value of said count value;
a sampling step of sampling said input signal in accordance with said first timing signal and outputting the sampled signal as a data-synchronized output signal;
a preset signal generation step of monitoring a position at which said edge signal exists in accordance with said second timing signal and for outputting said preset signal when the position at which said edge signal exists is in one of a period of said first timing signal or a period in the vicinity of said first timing signal; and
a count value setting step of setting said count value to a value such that a phase of said first timing signal is shifted when the preset signal is received.

6. A non-contact IC card receiving a modulation signal space-transmitted from a data transmitter and modulated by a data signal, generating power from said received modulation signal by a power generation section built therein, generating a clock signal from said received modulation signal by a clock generation means built therein, activating a signal processing operation by the power generated by said power generation section, conducting a digital signal processing using the clock signal generated by said clock generation means, obtaining said data signal from said received modulation signal and conducting a predetermined data processing in accordance with said data signal, comprising:
a demodulation means, supplied with the power generated by said power generation section, for demodulating and outputting said data signal from said received modulation signal;
a data synchronization means, supplied with the power generated by said power generation section and with an output signal of said demodulation means, for sampling and outputting the output signal of said demodulation means with said clock signals in a predetermined sampling period and for changing a phase of said sampling when the edge of the output signal of said demodulation means is in said sampling period or a period in the vicinity of said sampling period, thereby conducting a data synchronization for the output signal of said demodulation means; and
a digital signal processing means, supplied with the power generated by the power generation section and with the output signal of the data synchronization means, for conducting a decoding process for the output signal of the data synchronization means using the clock signal and fcr conducting a predetermined data processing in accordance with the decoding result.

7. A non-contact IC card according to claim 6, wherein said data synchronization means consists of:
an edge detection means for detecting an edge of the output signal of said demodulation means and outputting an edge signal;
a start detection means for detecting a first edge signal when said output signal of said demodulation means is inputted, among said edge signals outputted, and for generating a start signal when detecting the edge signal;
a counter starting a counting of clock signals in a period of 1/N times as long as a minimum period of said output signal of the demodulation means by said start signal, where N is an integer, generating a count value, generating a first timing signal at a first predetermined value of the count values, generating a second timing signal at a second predetermined value to said count values and setting said count value to a value such that a phase of said first timing signal is shifted when a preset signal is received;
a sampling means for sampling said output signal of said demodulation means in accordance with said first timing signal and outputting the sampled signal or a data-synchronized output signal; and
a preset signal generation means for monitoring a position at which said edge signal exists in accordance with said second timing signal and for outputting said preset signal when the position at which said edge signal exists is in one of a period of said first timing signal or a period in the vicinity of said first timing signal.

8. A non-contact IC card according to claim 7, wherein said counter is a cyclical counter generating cyclical count values and generates the first predetermined value and said second predetermined value among said count values at every period corresponding to a half period of a minimum period of said output signal.

9. A non-contact IC card according to claim 8, wherein said cyclical counter circulates and counts in a period corresponding to the minimum period of said output signal of said demodulation means and generates said second predetermined value after one count amount of the first predetermined value among said count values.

10. A non-contact IC card according to claim 9, wherein said cyclical counter sets a count value to the first predetermined value among said count values when receiving said preset signal.
